# EUROPEAN PATENT SPECIFICATION

(11) **EP 2 055 618 B1**
(45) Date of publication and mention of the grant of the patent: **29.12.2010**
(21) Application number: 08253366.2
(22) Date of filing: 16.10.2008
(51) Int. Cl.: B62J 15/00, B62K 11/04, B62K 19/30

(54) **Motorcycle with a seat rail**
Motorrad mit einer Sitzschiene
Motocyclette comportant un rail de siège

(30) Priority: 02.11.2007 JP 2007286422
(43) Date of publication of application: 06.05.2009
(73) Proprietor: HONDA MOTOR CO., LTD., Tokyo (JP)
(72) Inventor: Nishijima, Tomoki c/o Honda R&D Co., Ltd., Wako-shi Saitama, 351-0193 (JP); Tsutsui, Noriyoshi c/o Honda R&D Co., Ltd., Wako-shi Saitama, 351-0193 (JP)
(74) Representative: Stevens, Jason Paul

(56) References cited:
- EP-A- 1 550 605
- EP-A- 1 964 759
- JP-A- 2007 055 283
- JP-A- 2007 099 084

## Description

The present invention relates to a motorcycle with a seat rail.

A seat rail is provided at the rear of a body of a motorcycle to support a seat, and is usually in the form of right and left members which extend backward from the rear of a main frame forming a front part of the body so as to support the seat (see, for example, JP 1-317886).

JP 1-317886 is concerned with a seat frame of a motorcycle. Fig. 1 of JP 1-317886 shows grips 9 which can be held by a passenger of the motorcycle. The grips project downward from the sides of the rear of the right and left seat frames, and are U-shaped in section and open upwardly. The grips 9 are integrated with rear halves of the left and right seat frames 5, 6, and protrude sideways as shown in Fig. 4 of JP 1-317886.

The grips of the seat frames in JP 1-317886 have a number of problems. As they project from both sides of the seat frames, the width of the seat frame is increased. Further, as they are U-shaped and open upwardly, the semi-cylindrical outside faces are gripped when a passenger seated on the rear of the seat grasps the grips, and it can be difficult to grasp these firmly. In addition, when the sides of the grips are covered with a rear fender and a rear cowl to improve the appearance of the motorcycle, the difficulty of grasping the grips is increased.

Further motorcycles with grips are disclosed in JP 2007-055283, JP 2007-099084 and EP 1550605. In particular, JP 2007-055283 discloses a motorcycle according to the preamble of claim 1.

The invention is made in view of the above-mentioned problems, and it is an object of at least the preferred embodiments of the invention to provide a seat rail for a motorcycle which can be easily and securely grasped by a passenger, by providing parts which can be grasped by hand on the right and left sides of the seat rail. It is also an object of at least the preferred embodiments of the invention to avoid an increase of vehicle width and to maintain the appearance quality of the vehicle, even when the parts which can be grasped by a hand are provided.

According to a first aspect of the present invention, is provided a motorcycle as set out in claim 1.

As the concave portion is provided towards the rear of the seat rail, inward and upward from the outside in a direction of vehicle width, fingers may be inserted into the concave portion directed upward when a passenger grasps the concave portion as a part for securing a hand, the inner surface of the concave portion and the outside side in the concave portion of the seat rail hit cushions of the passenger's fingers and the passenger's palm outside the concave portion, and the concave portion can be easily and securely grasped.

Further, the part for securing a hand does not project outwardly, the size in the direction of width of the right and left seat rails can be reduced, and as the seat rail has no part protruded sideward, the appearance quality of the seat rail may also be improved.

In addition, as the convex portion of the rear fender is fitted to the concave portion of the seat rail, and as the rear fender is normally made of resin, the part for securing a hand is the concave portion made of resin. When the concave portion is grasped as the part for securing a hand, a feel of a grasp is satisfactory, and the part can be easy to grasp.

In a further preferred form, each concave portion of the seat rail is covered with a rear cowl from the outside in a side view.

As the concave portion of the seat rail is covered with the rear cowl from the outside in the side view, the part for securing a hand formed by the concave portion provided to the rear of the seat rail and the convex portion of the rear fender is concealed from the outside, and as the side of the rear of the rear cowl is exposed In this part, the appearance quality is satisfactory.

In a further preferred form, the concave portions of the seat rail are substantially elliptic in a top view; and the convex portions of the rear fender fit within the concave portions.

As the concave portion of the seat rail is substantially elliptic in the top view and the convex portion of the rear fender fits within the concave portion, the whole circumference of the part for securing a hand is surrounded, the whole circumferences of fingers and a palm are surrounded, and the part for securing a hand can be easily and more securely grasped.

Preferred embodiments of the invention will now be described by way of example only and with reference to the accompanying drawings, in which:
Fig. 1 is a schematic side view showing a motorcycle provided with seat rails according to a preferred embodiment of the invention;
Fig. 2 is an enlarged side view showing a seat;
Fig. 3 is a sectional view viewed along a line 3-3 in Fig. 2;
Fig. 4 is an enlarged side view showing the seat shown in a state in which a main part shown in Fig. 2 is broken;
Fig. 5 is a plan showing the seat rails shown in a state in which the seat is removed;
Fig. 6 is a bottom view showing the seat rails viewed from their bottoms;
Fig. 7 is a bottom view showing the rears of the seat rails including a rear fender, a fender stay and a license plate holder;
Fig. 8 is a plan showing the rear of the motorcycle including the rear of the seat;
Fig. 9 is a view in the direction shown by arrow 9 in Fig. 8; and
Fig. 10 is a sectional view showing a part at the back of Fig. 3.

Referring to the attached drawings, an embodiment of the invention will be described below. The drawings should be viewed in the direction of reference numerals. In the drawings, Fr denotes the front side of a vehicle, Rr denotes the rear side, R denotes the right based upon the normal position of a rider, and L denotes the left.

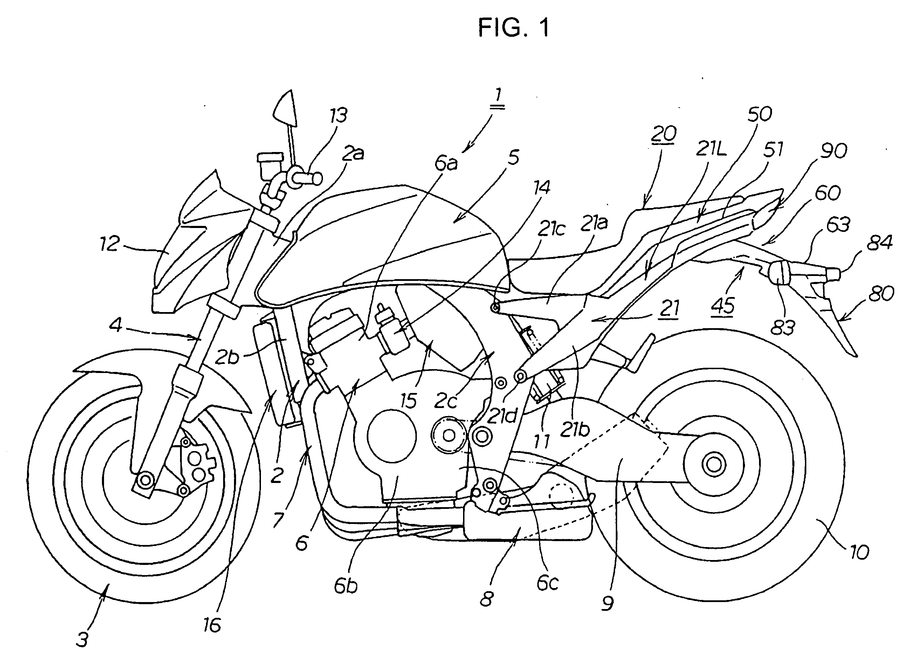

Fig. 1 is a schematic side view showing a motorcycle provided with a seat rail according to a preferred embodiment of the invention.

In the motorcycle 1, a front wheel 3 is steerably supported by a head pipe 2a at a front end of a frame 2 via a front fork 4, a fuel tank 5 is arranged on the upper side of a front half of the frame 2, a rear frame 2c is hung in an intermediate part in a longitudinal direction of the motorcycle, and an engine 6 is arranged between a down tube 2b and the rear frame 2c. In the embodiment shown, the engine 6 is a water-cooled in-line four-cylinder engine where plural cylinders 6a are arranged in parallel in a direction of vehicle width.

Exhaust pipes 7 extend forward, downward and then backward from the fronts of the cylinders 6a of the engine 6, and an exhaust system 8 including a muffler and a silencer is arranged below a crankcase 6b and a transmission case 6c at the back of the crankcase.

A rear swing arm 9 extends rearward for supporting a rear wheel 10, and is pivotably connected to a lower half of the rear frame 2c. A rear cushion unit 11 is inserted between the rear swing arm 9 and the upper side of an intermediate part of the rear frame 2c on the body side.

In addition, reference numeral 12 in Fig. 1 denotes a headlight, 13 denotes a handlebar, 14 denotes fuel supply equipment such as a carburettor arranged at the back of the cylinders 6a of the engine, 15 denotes an air cleaner, and 16 denotes a radiator.

A seat 20 is arranged behind the fuel tank 5 of the above-mentioned motorcycle, and in the embodiment, the seat 20 is a tandem seat on which the rider and a pillion passenger can be seated in the longitudinal direction.

The seat 20 is supported by the seat rail 21.

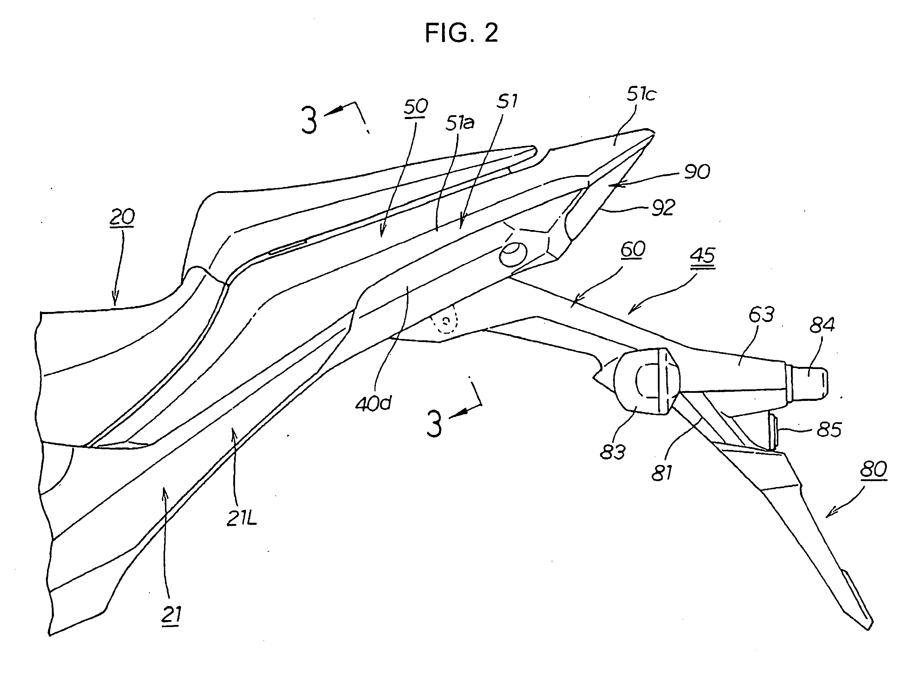

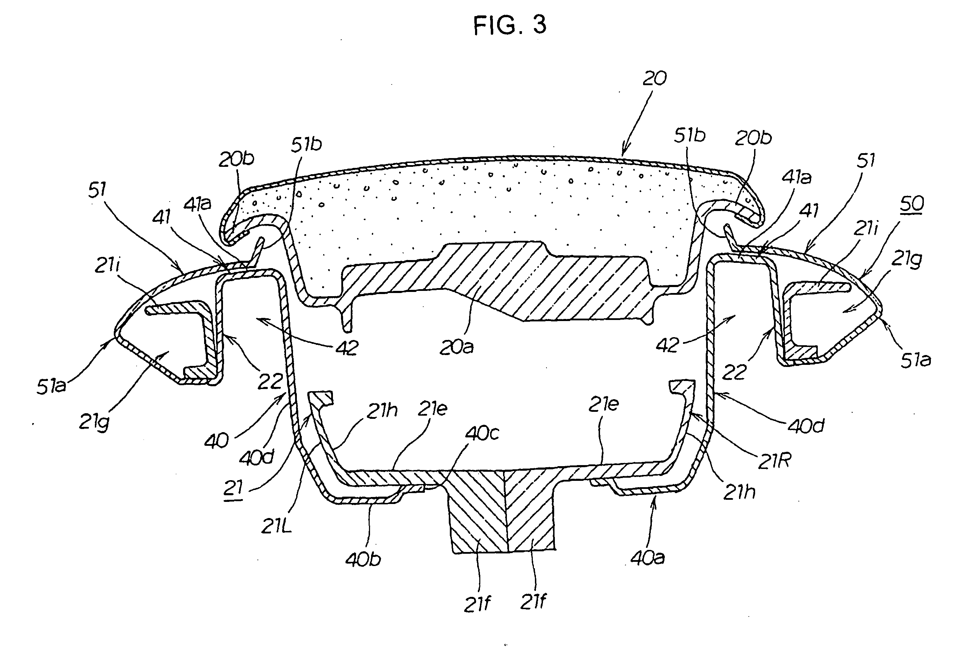

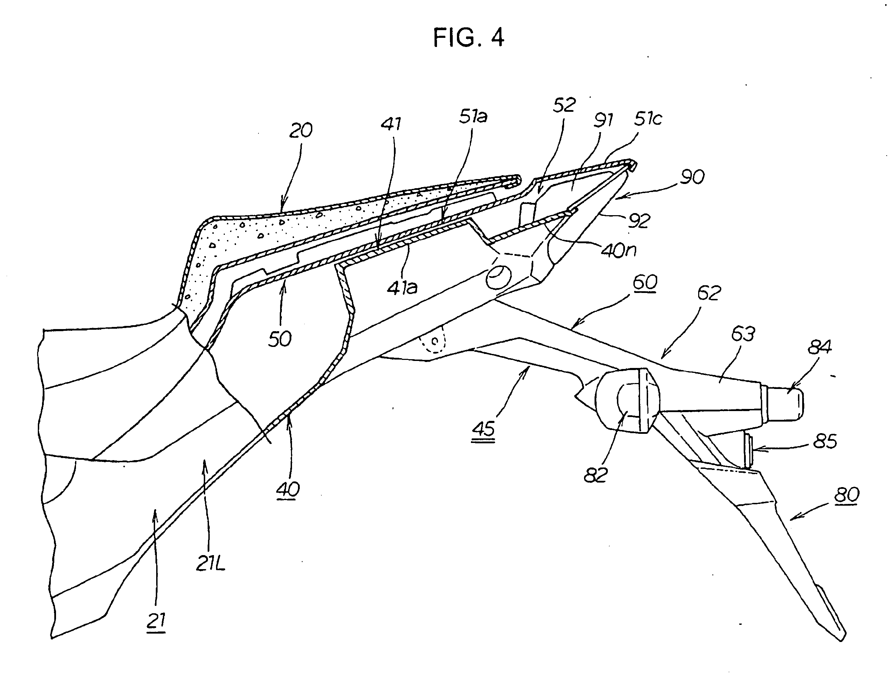

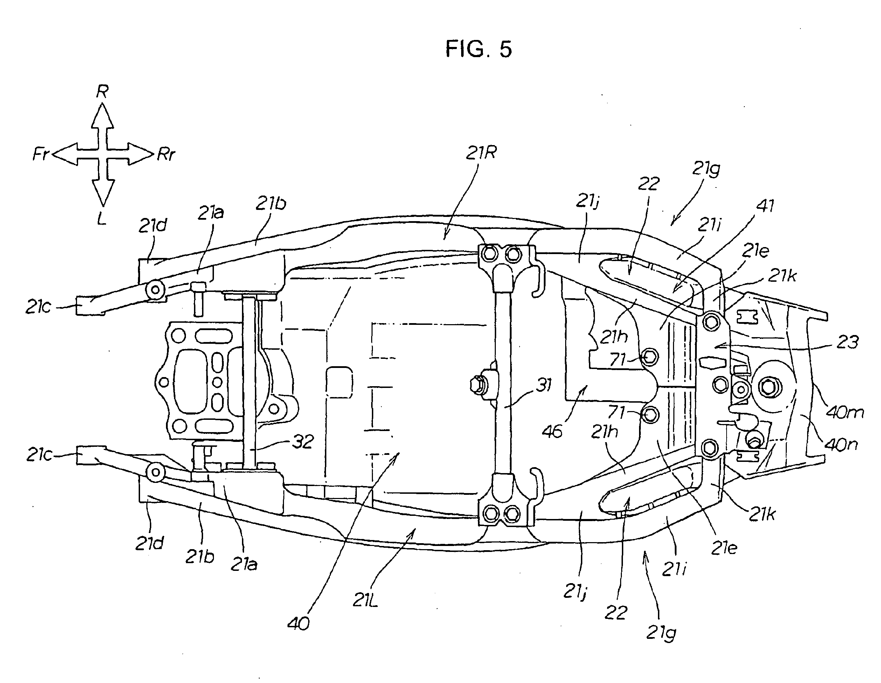

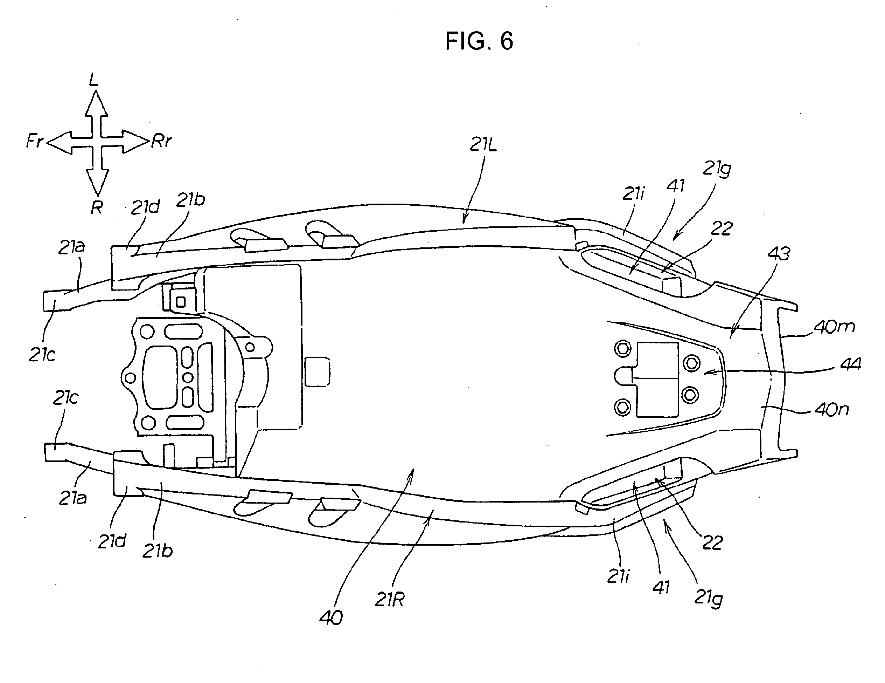

Fig. 2 is an enlarged side view showing the seat, Fig. 3 is a sectional view along line 3-3 in Fig. 2, Fig. 4 is an enlarged side view showing the seat in a state in which a main part shown in Fig. 2 is broken away, Fig. 5 is a plan showing the seat rail from which the seat is removed, and Fig. 6 is a bottom view showing the seat rail viewed from the bottom. The seat rail will now be described with reference to these drawings.

The seat rail 21 is formed from left and right members 21L, 21R and is formed by a casting, which may be of an aluminium alloy or any suitable material (see Figs. 3, 5 and 6).

Referring to Fig. 1 again, a front end of each left and right seat rail member 21 is formed in a V-shape having upper and lower parts 21a, 21b. Each seat rail member is provided with mounting parts 21c, 21d at its front end, and is attached to and supported by an upper part and the intermediate part of the rear frame 2c via the front ends (the mounting parts 21c, 21d). Further, each seat rail member extends backward and is inclined upwardly.

The plan shapes and the bottom shapes of the seat rail members 21L, 21R are shown in Figs. 5 and 6. The rears of the left and right seat rail members 21L, 21R are provided with bottom pieces 21e, and depending parts 21f are integrally formed on the lower and inner parts of bottom pieces 21e, with the inner surfaces of the depending parts 21f being matched and fastened.

Each seat rail member 21L, 21R is laterally branched in its rear part in the bottom piece 21e in the rear and the hanging part 21f. The intermediate rear parts of the seat rails are coupled by an intermediate cross member 31 installed between them, the front parts of the seat rails are coupled by a front cross member 32 installed between them, and the left and right seat rails 21L, 21R are integrated.

An upwardly concave portion 22 is provided from the outside to the inside (in the direction of vehicle width) in the rear 21g of each left and right seat rail 21L, 21R.

Both concave portions 22 are provided with standing walls 21h, which project upwardly from the outside of the bottom pieces 21e, and symmetrical U-shaped side frames 21i located above the standing walls, located outside in a lateral direction and open to the outside in the lateral direction as shown in Fig. 3.

One concave portion 22 is formed between the right standing wall 21h and the right side frames 21i, and the other concave portion 22 is formed the left standing wall 21h and the left side frame 21i.

The above-mentioned concave portions 22 are holes vertically open in the embodiment as shown in Fig. 3; however, they may also be concave portions, grooves or notches respectively provided with ceilings at the crest in place of the holes.

As clear in the plan view shown in Fig. 5, frames 21j, 21k surrounding the front and the rear of the concave portions 22 are provided. In the embodiment, each concave portion 22 is substantially in the shape of an ellipse surrounded by the side frame 21i in the lateral direction, surrounded by the standing wall 21h inside and surrounded by the frames 21j, 21k in its longitudinal direction.

In the embodiment, as shown in Fig. 5, a coupling plate 23 couples the frames 21k at the rear.

A rear fender 40 made of resin is installed between the bottoms of the left and right seat rails 21L, 21R in the embodiment and closes the space between the bottoms of the seat rails 21L, 21R. Fig. 5 shows a top face of the rear fender 40 and Fig. 6 shows a bottom of the rear fender 40.

The rear fender 40 is integrated with convex portions 41 which protrude upward at both sides at the rear, and the convex portions 41 fit into the concave portions 22 provided in the rears of the seat rails 21L, 21R. Fig. 4 clearly shows the protruding shape of the convex portion 41. The convex portions are formed in a lateral direction at the rear of the rear fender 40 and are long in the longitudinal direction on their upper sides, with the lateral width smaller than the length and with the convex portions open downwardly and protruded upwards.

The convex portions 41 of the rear fender 40 are provided at the sides of the rear of the rear fender 40 as described above; further, as shown in Fig. 3, an opening 40c through which the depending parts 21f at the rear of the seat rails 21L, 21R project downward is provided in a bottom plate 40b of the rear 40a of the rear fender 40.

As shown in Fig. 3, the right and left convex portions 41 provided towards the rear of the rear fender 40 are fitted from the lower side into the concave portions 22 provided at the sides of the rears of the seat rails 21L, 21R to close the concave portions 22. The top faces 41a of the convex portions 41 close off the upper parts of the concave portions, and downwardly open void spaces 42 which are larger longitudinally than laterally are formed.

Each downwardly open void space 42 is formed to be slightly longer in its longitudinal direction than the width of a hand, and the lateral width is sufficient to allow insertion of the forefinger to the little finger of a hand in line.

A rear cowl 50 covers the rear parts of the sides of the above-mentioned left and right seat rails 21L, 21R.

The rear cowl 50 is made of resin, and is provided with overhanging parts 51 which project laterally symmetrically in a wedge shape, as shown in Fig. 3.

The rear part 51a of each overhanging part 51 covers a substantial part of an outside face, a top face and a bottom of each symmetrical U-shaped side frame 21i which is to the outside at the rear of each seat rail 21L, 21R, and each U-shaped side frame 21i is accommodated in the wedge-shaped space.

Right and left ends 20b of a bottom plate 20a of the seat 20, which is laid on and supported by the seat rails 21L, 21R, cover and conceal the upwardly-projecting inner ends 51b of the right and left overhanging parts 51 of the rear cowl 50.

As shown in Fig. 2, a part 40d below the rear 51a of the overhanging part 51 is a lower part of a side wall of the rear fender 40 shown in Fig. 3.

The rear structure, including a structure for mounting a fender stay on a rear end 43 of the rear fender 40, will now be described.

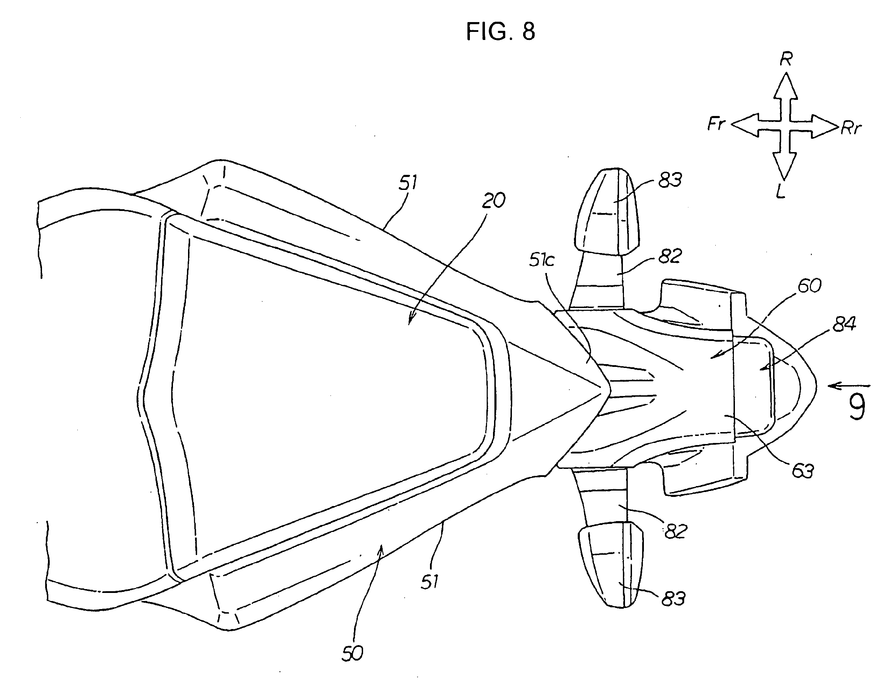

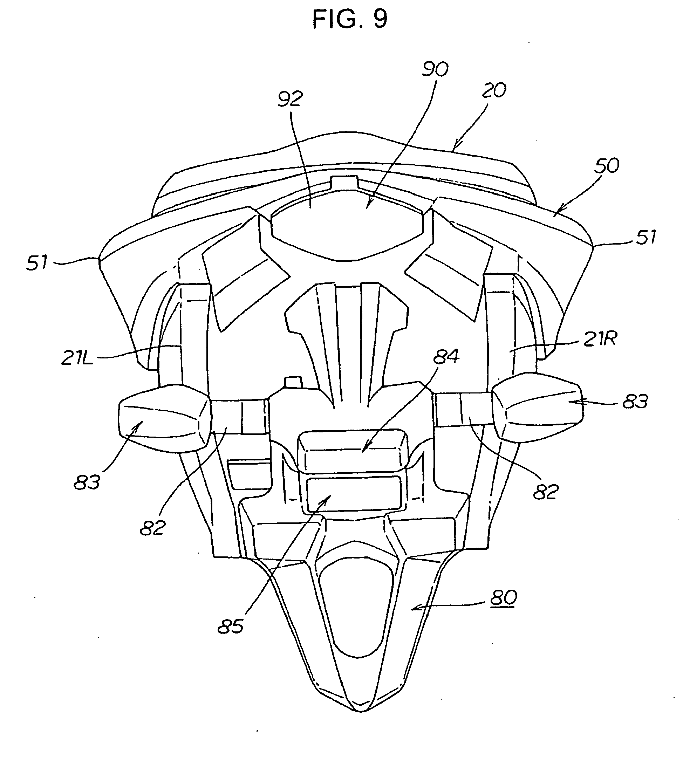

Fig. 8 is a plan view of the rear of the motorcycle including the rear of the seat, and Fig. 9 is a view in the direction shown by arrow 9 in Fig. 8.

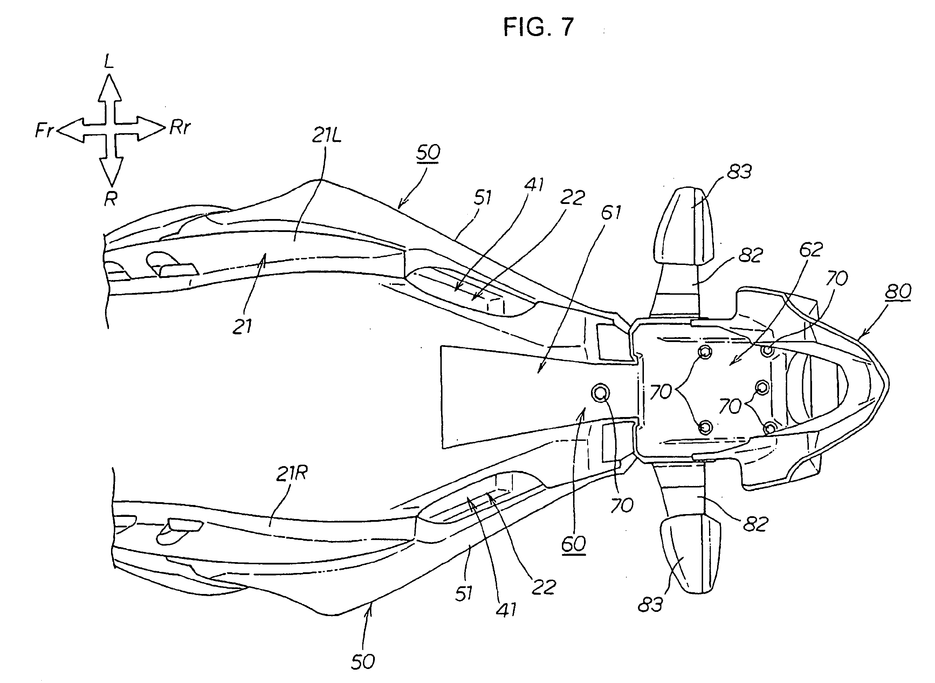

A front mounting part 44 (shown in the bottom view in Fig. 6) is provided toward the rear of the rear fender 40. A front half 61 of a fender stay 60, which is narrow width-wise and long in the longitudinal direction as shown in Fig. 7, is fitted to a fitting part (not shown) formed at the bottom of the rear of the rear fender 40 by inserting a fitting pawl at its end, and the centre of the rear of the front half is connected to the rear of the rear fender 40 by a tapping screw 70.

A rear half 62 of the fender stay 60 extends from the back of the rear fender 40 and the back of the rear cowl 50 to be the tail 45 of the rear fender 40.

The rear half 62 of the fender stay 60 is wider than the front half 61, as shown in the bottom view in Fig. 7, and a license plate 80 holder for mounting a number plate extends backward and downward from the rear half 62.

In the embodiment, the rear half of the lower part of the fender stay 60 is vertically divided into the rear half 62 of the fender stay and the license plate holder 80.

The rear half 62 of the fender stay and the license plate holder 80 are connected by tapping screws 70 as shown in Fig. 7.

Supporting arms 82 extend to the outside in a lateral direction in the vicinity of joining surfaces of a front half 81 of an upper part of the license plate holder 80 and the rear 63 of the fender stay 60 (see Fig. 7). Right and left rear blinker lamps 83 are attached to and supported by the supporting arms 82.

A light 84 for illuminating the license plate is housed and installed inside or on a rear face of the rear 63 of the rear fender 60, with a lens surface directed backward, and a reflector 85 is provided at the upper part of the license plate holder 80 immediately under the light 84.

A concave portion 40m, which slightly rearwardly backward in the longitudinal direction, is provided at a rearmost part 40n of the rear fender 40 (see Figs. 5 and 6). A rear end 51c of the rear cowl 50 extends to the upper edge of the concave portion 40m with the rear end 51c opposite the top of the rearmost part 40n of the rear fender 40, and a void space 52 surrounded by this part is formed (see Fig. 4).

A body including a lamp housing of a tail light 90 is housed in the void space 52, and a lens 92 is exposed to the rear, with the lens pointed backward.

Lighting equipment such as the tail light 90, the right and left blinker lamps 82, and the light 84 for illuminating the license plate, are wired so that they are connected to a power source and others through the space surrounded by the rear fender 40, the rear cowl 50 and the seat 20 between the left and right seat rails 21L, 21R or one side of the seat rail and the inside on this side of the rear cowl 50.

A reference numeral 46 shown in Fig. 5 denotes a lid provided to the rear of the rear fender 40, and the lid is provided to conceal the wiring.

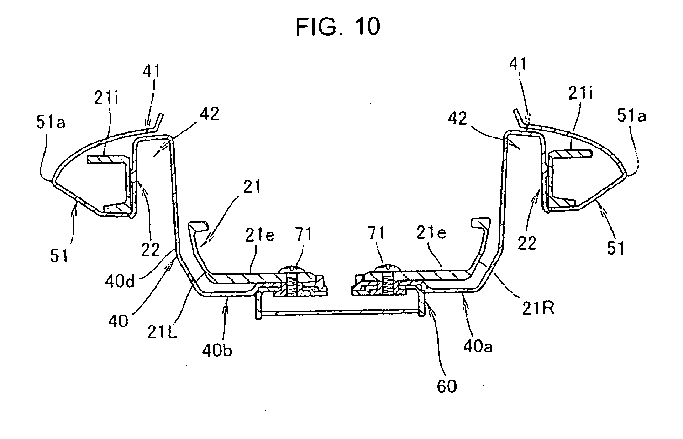

To explain the common connecting structure of the seat rail 21, the rear fender 40 and the fender stay 60, Fig. 10 is a sectional view showing the rear in Fig. 3 and is a sectional view showing a part including bolts 71 shown in Fig. 5 and similar to Fig. 3.

The bolts 71 penetrate the bottom parts 21e of the left and right seat rails 21L, 21R, the bottom plate 40b of the rear 40a of the rear fender 40 which overlap under the bottom parts 21e, and left and right parts of the fender stay 60 which overlap under the bottom plate 40b via each stepped nut from the upside, and these three are fastened by the common bolts 71.

Thus, the three can be connected and integrated by the common bolts, the number of parts can be reduced, and the man-hours required for assembly can also be reduced.

The seat rails are suitable for seat rails that support a tandem seat of a motorcycle.

## Claims

1. A motorcycle (1) with a seat rail (21), a front end of which seat rail is supported by an intermediate part of a body frame (2c) of the motorcycle (1) and the seat rail (21) extends backwards, comprising:
a downwardly-open concave portion (22) provided towards the rear of the seat rail (21), inward from the outside in a direction of vehicle width;
the seat rail (21) is formed from right and left members (21 L, 21 R), and the downwardly-open concave portion (22) is provided towards the rear of each right and left member (21 L, 21 R); **characterized in that**
a rear fender (40) is supported by the seat rail (21); and
the rear fender (40) has convex portions (41) which protrude upward at both lateral sides toward the rear of the rear fender (40) and project into the concave portions (22).

2. A motorcycle with a seat rail as claimed in claim 1, wherein each concave portion (22) of the seat rail (21) is covered with a rear cowl (50) from the outside in a side view.

3. A motorcycle with a seat rail as claimed in claim 1, wherein:
the concave portions (22) of the seat rail (21) are substantially elliptic in a top view; and
the convex portions (41) of the rear fender (40) fit within the concave portions (22).

## Patentansprüche

1. Motorrad (1) mit einer Sitzschiene (21), wobei ein vorderes Ende der Sitzschiene von einem Mittelteil eines Karosserierahmens (2c) des Motorrads (1) gestützt ist und wobei sich die Sitzschiene (21) rückwärts erstreckt, umfassend:
einen nach unten offenen konkaven Abschnitt (22), der in Richtung der Hinterseite der Sitzschiene (21), einwärts von außen in eine Breitenrichtung des Fahrzeugs bereitgestellt ist;
wobei die Sitzschiene (21) aus rechten und linken Elementen (21 L, 21 R) geformt ist und der nach unten offene konkave Abschnitt (22) in Richtung der Hinterseite jedes des linken und rechten Elements (21 L, 21 R) bereitgestellt ist;
**dadurch gekennzeichnet, dass**
ein hinterer Kotflügel (40) von der Sitzschiene (21) gestützt ist; und
der hintere Kotflügel (40) konvexe Abschnitte (41) hat, welche an beiden lateralen Seiten zu dem Heck des hinteren Kotflügels (40) hinaufragen und in die konkaven Abschnitte (22) hineinragen.

2. Motorrad mit einer Sitzschiene nach Anspruch 1, wobei jeder konkave Abschnitt (22) der Sitzschiene (21) von einer hinteren Verkleidung (50) in einer Seitenansicht von außen bedeckt ist.

3. Motorrad mit einer Sitzschiene nach Anspruch 1, wobei:
die konkaven Abschnitte (22) der Sitzschiene (21) in Draufsicht im Wesentlichen elliptisch sind; und
die konvexen Anschnitte (41) des hinteren Kotflügels (40) innerhalb der konkaven Abschnitte (22) passen.

## Revendications

1. Motocyclette (1) avec un rail de siège (21), une extrémité avant dudit rail de siège est supportée par une partie intermédiaire d'un châssis de carrosserie (2c) de la motocyclette (1) et le rail de siège (21) s'étend vers l'arrière, comprenant :
une partie concave ouverte vers le bas (22) disposée vers l'arrière du rail de siège (21), de l'extérieur vers l'intérieur dans le sens de la largeur du véhicule ;
le rail de siège (21) est formé par des éléments de droite et de gauche (21L, 21R), et la partie concave ouverte vers le bas (22) est disposée vers l'arrière de chaque élément de droite et de gauche (21L, 21R) ;
**caractérisée en ce que**
une aile arrière (40) est supportée par le rail de siège (21) ; et
l'aile arrière (40) a des parties convexes (41) qui font saillie vers le haut des deux côtés latéraux vers l'arrière de l'aile arrière (40) et se projettent dans les parties concaves (22).

2. Motocyclette avec un rail de siège selon la revendication 1, dans laquelle chaque partie concave (22) du rail de siège (21) est recouverte d'un capot arrière (50) de l'extérieur en vue de côté.

3. Motocyclette avec un rail de siège selon la revendication 1, dans laquelle :
les parties concaves (22) du rail de siège (21) sont sensiblement elliptiques en vue de dessus ; et
les parties convexes (41) de l'aile arrière (40) s'emboîtent dans les parties concaves (22).
